Europäisches Patentamt

European Patent Office

Office européen des brevets

(19)

(11) Veröffentlichungsnummer: **0 278 309**
**B1**

(12) **EUROPÄISCHE PATENTSCHRIFT**

(45) Veröffentlichungstag der Patentschrift:
**20.12.89**

(21) Anmeldenummer: **88101060.7**

(22) Anmeldetag: **26.01.88**

(51) Int. Cl.⁴: **F25C 5/02, B26D 3/06**

(54) **Verfahren und Vorrichtung zum Zerteilen eines Blockes aus gefrorenem, insbesondere tiefgefrorenem Lebens- oder Futtermittel in kleinere Einheiten.**

(30) Priorität: **28.01.87 DE 3702444**
**22.04.87 DE 3713421**

(43) Veröffentlichungstag der Anmeldung:
**17.08.88 Patentblatt 88/33**

(45) Bekanntmachung des Hinweises auf die Patenterteilung:
**20.12.89 Patentblatt 89/51**

(84) Benannte Vertragsstaaten:
**AT BE CH DE ES FR GB GR IT LI LU NL SE**

(56) Entgegenhaltungen:
**DE-A- 1 752 296**
**DE-C- 3 527 620**
**US-A- 4 043 231**

(73) Patentinhaber: **NIENSTEDT, Heinz, Zum Nonnenberg 8a,**
**D-4350 Recklinghausen(DE)**

(72) Erfinder: **NIENSTEDT, Heinz, Zum Nonnenberg 8a,**
**D-4350 Recklinghausen(DE)**

(74) Vertreter: **Patentanwaltsbüro Cohausz & Florack,**
**Postfach 14 01 20 Schumannstrasse 97,**
**D-4000 Düsseldorf 1(DE)**

## Beschreibung

Die Erfindung bezieht sich auf ein Verfahren zum Zerteilen eines Blockes aus gefrorenem, insbesondere tiefgefrorenem Lebens- oder Futtermittel, wie Fisch, Fleisch, Gemüse oder dergleichen, in kleinere Einheiten mittels mehrerer zueinander paralleler, kreisscheibenförmiger, rotierender Trennblätter, insbesondere Kreissägeblätter, bei dem der Block unter die oberhalb einer Plattform angeordneten Trennblätter geschoben wird.

Die Erfindung bezieht sich ferner auf eine Vorrichtung zur Durchführung des Verfahrens.

Manche Lebensmittel, aber auch Futtermittel, wie Fisch, Fleisch, Gemüse, werden zu Blöcken tiefgefroren, dann schrittweise in kleinere quaderförmige Einheiten, und zwar in Riegel, Platten oder Stäbchen zerschnitten. Dabei wird gefordert, daß möglichst wenig Schnittverlust entsteht. Diese Forderung hat man schon zufriedenstellend mit einem Verfahren und einer Vorrichtung der eingangs genannten Art dadurch gelöst, daß im Gegensatz zu früheren Verfahren und Vorrichtungen die Trennblätter nicht von unter die Plattform durchgreifen, sondern oberhalb der geschlossen ausgebildeten Plattform angeordnet sind. Auf diese Art und Weise wird verhindert, daß der beim Zerteilen nicht zu vermeidende Verschnitt unter die Plattform gelangt und verlorengeht. Da der Verschnitt oberhalf der Plattform verbleibt, ist es möglich, ihn aufzufangen und den kleineren Einheiten wieder zuzuführen. Darüber hinaus ist es bei Anordnung der Trennblätter oberhalb der Plattform möglich, diese verhältnismäßig dünn auszuführen und ihnen eine ausreichende Steifigkeit dadurch zu verleihen, daß sie bis auf einen der Dicke der Blöcke entsprechenden Rand zwischen Flanschen eingespannt sind. (DE-C 35 12 488 und DE-C 35 27 620).

In der Praxis hat sich gezeigt, daß es beim Zerteilen der Blöcke zu Unregelmäßigkeiten insofern kommen kann, als sich die Trennblätter infolge einer örtlichen Verhärtung im Block verformen und größere Stücke aus dem Block herausreißen. Darüber hinaus kann es dazu gekommen, daß kleinere Einheiten mit erhöhter Geschwindigkeit den Schneidbereich verlassen und sich beim Aufprall verformen und/oder den weiteren Transport stören.

Der Erfindung liegt die Aufgabe zugrunde, ein Verfahren und eine Vorrichtung zu schaffen, mit dem bzw. mit der es möglich ist, Blöcke mit örtlich unterschiedlicher Härte störungsfrei zu schneiden.

Diese Aufgabe wird verfahrensmäßig dadurch gelößt, daß die Blöcke mittels der Trennblätter bis auf dünne Stege durchtrennt und durch nachgeordnete Trennelemente die Stege durchtrennt werden, wobei die Durchtrennung der Stege bereits beginnt, wenn die Blöcke noch mittels der Trennblätter durchtrennt werden.

Vorrichtungsmäßig wird die Aufgabe dadurch gelöst, daß die Trennblätter mit ihrem peripheren Rand in einem derart kleinen Abstand von der Auflagefläche der Plattform angeordnet sind, daß der Block zum größeren Teil bis auf dünne Stege durchtrennt wird, und in Transportrichtung des Blockes hinter den Trennblättern mit diesen fluchtend ausgerichtete, die Spalte zwischen der Aufnahmefläche und den mit Abstand dazu angeordneten Rändern der Trennblätter überbrückende Trennelemente zur Durchtrennung der Stege angeordnet sind.

Da bei der Erfindung im Bereich der Trennblätter keine vollkommene Durchtrennung des Blockes in kleinere Einheiten erfolgt, verlassen die nur noch über die dünnen Stege verbundenen kleineren Einheiten als zusammenhängende Einheit den Bereich der Trennblätter. Erst im Bereich der außerhalb des Wirkungsbereichs der Trennblätter angeordneten Trennelemente erfolgt die vollkommene Durchtrennung. Deshalb können einzelne Einheiten, in denen die Trennblätter auf härtere Stellen auftreffen, durch die Trennblätter nicht aus dem Bereich der Trennblätter herauskatapultiert werden. Eine Beschädigung der kleineren Einheiten sowie eine Störung des weiteren Transportes wird auf diese Art und Weise wirksam verhindert.

Vorteilhafte Ausgestaltungen des Verfahrens bestehen beispielsweise darin, daß für die Durchtrennung der Stege im Transportweg der Blöcke ortsfest angeordnete Messer verwendet werden.

Als zweckmäßig für den weiteren Transport hat sich erwiesen, wenn die Auflagefläche für die durchtrennten kleineren Einheiten in gegeneinander höhenversetzte Transportbahnen übergeht, die mit den Zwischenräumen zwischen den Trennblättern fluchtend ausgerichtet sind. Durch das Höhenversetzen der benachbarten kleineren Einheiten gegeneinander wird verhindert, daß nach dem Durchtrennen die Einheiten wieder zusammenfrieren.

Auch bei der Erfindung ist von Vorteil, wenn, wie an sich bekannt, in Transportrichtung hinter den Trennblättern und oberhalb der Auflagefläche und/oder der Transportbahnen Niederhalter für die durchtrennten Blöcke vorgesehen sind. Die Niederhalter können mit ihren an den Blöcken bzw. kleineren Einheiten wirksamen Teilen als gegeneinander versetzte Rollen ausgebildet sein.

Im folgenden wird die Erfindung anhand einer ein Ausführungsbeispiel darstellenden Zeichnung näher erläutert. Im einzelnen zeigen:

Fig. 1 eine Vorrichtung zum Durchtrennen von Blöcken in schematischer Darstellung in Seitenansicht und

Fig. 2 zwei Alternativen eines Trennblattes im axialen Halbschnitt.

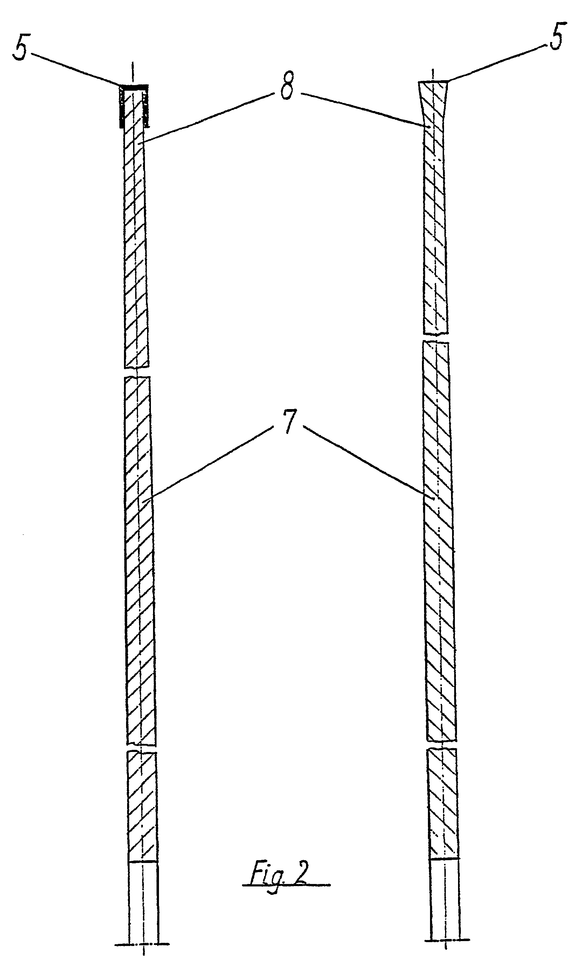

Oberhalb einer Plattform 1 sind auf einer angetriebenen Welle 2 mehrere kreisscheibenförmige Trennblätter 3 zwischen Versteifungsflanschen 4 mit gegenseitigem Abstand voneinander eingespannt angeordnet. Der periphere Rand 5 eines jeden Trennblattes 3 ist mit geringem Abstand von der Auflagefläche 6 der Plattform 1 angeordnet. Fluchtend mit jedem Trennblatt 3 ist ein bis zur Auflagefläche 6 reichendes Trennelement 8 in Form eines Keilmessers unmittelbar hinter jedem Trennblatt 3 angeordnet. An die Auflagefläche 6 schließen sich höhenversetzte Transportbahnen 9,10 an, deren Breite dem Abstand der Trennblätter 3 entspricht und die mit den Zwischenräumen zwischen den Trennblättern 3 fluchten. Bei jeder dieser Transportbahnen 9,10 sind hintereinander ein kleinerer Rollensatz 11,12 und ein größerer Rollensatz 13,14 vorgesehen. Die Rollen 11,12,13,14 sind den einzelnen Transportbahnen 9,10 zugeordnet. Aufgrund unterschiedlicher Durchmesser der einzelnen Rollen 11,12,13,14 wird die Höhenversetzung der Transportbahnen 9,10 ausgeglichen, so daß die Rollen 11,12,13,14 den gleichen Abstand von der Auflagefläche der Transportbahnen 9,10 haben. Die Trennblätter 3 haben den in Figur 2 dargestellten Aufbau. Über einen konischen Ringabschnitt 7 gehen sie in den verhältnismäßig dünnen äußeren Bereich 8 über, der beim links dargestellten Ausführungsbeispiel an seinem peripheren Rand 5 und einem sich daran anschließenden Ringbereich auf beiden Seiten des Trennblattes mit Diamantstaub belegt ist und beim rechts dargestellten Ausführungsbeispiel radial von außen gestaucht, z.B. gerändelt oder mit gestauchten Zähnen versehen ist. In beiden Fällen kann das Trennblatt 3 deshalb spanabhebend wirksam werden.

Die Arbeitsweise der Vorrichtung ist folgende:

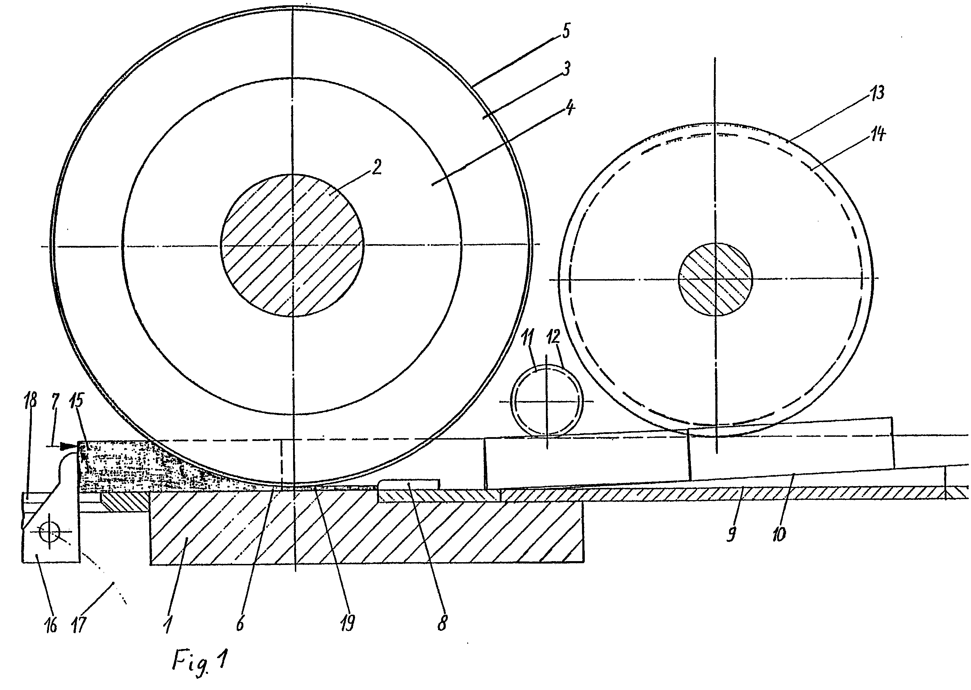

Zu zerteilende quaderförmige Blöcke bzw. Platten 15 werden an ihrer Hinterkante von Mitnehmern 16 hintergriffen und vorgeschoben, die an einer umlaufenden Transportkette 17 angeordnet sind und eine rostartige Plattform 18 von unten durchgreifen. Wie Figur 1 zeigt, durchtrennen die Trennblätter 3 die Platten 15 nicht vollkommen, sondern lassen dünne Stege 19 stehen. Diese dünnen Stege 19 werden von den nachgeordneten Keilmessern 8 durchtrennt, deren Form aus Figur 1 ersichtlich ist. Bei dieser vollkommenen Durchtrennung erfolgt die Höhenversetzung der so erhaltenen einzelnen kleineren Einheiten im Bereich der Transportbahnen 9,10. Dabei sorgen die als Niederhalter wirksamen Rollen 11,12,13,14 dafür, daß diese Höhenversetzung und der weitere Transport störungsfrei verlaufen. Im gesamten Bereich, also auch im Bereich der Trennblätter 3, bleiben die Blöcke 15 und/oder kleineren Einheiten wegen der verbliebenen Stege 19 unter Kontrolle. Zu einem Herausschleudern einzelner Teile kann es nicht mehr kommen.

**Patentansprüche**

1. Verfahren zum Zerteilen eines Blockes aus gefrorenem, insbesondere tiefgefrorenem Lebens- oder Futtermittel, wie Fisch, Fleisch, Gemüse oder dergleichen, in kleinere Einheiten Mittels mehrerer parallel angeordneter, kreisscheibenförmiger rotierender Trennblätter, insbesondere Kreissägeblätter, bei dem der Block unter die oberhalb einer Plattform angeordneten Trennblätter geschoben wird, dadurch gekennzeichnet, daß der Block mittels der Trennblätter bis auf dünne Stege durchtrennt wird und durch nachgeordnete Trennelemente die Stege durchtrennt werden, wobei die Durchtrennung der Stege bereits beginnt, wenn der Block noch mittels der Trennblätter durchtrennt wird.

2. Verfahren nach Anspruch 1, dadurch gekennzeichnet, daß für die Durchtrennung der Stege im Transportweg des Blockes ortsfest angeordnete Messer verwendet werden.

3. Verfahren nach Anspruch 1 oder 2, dadurch gekennzeichnet, daß nach der Durchtrennung die kleineren Einheiten beim weiteren Transport gegeneinander höhenversetzt werden.

4. Vorrichtung zur Durchführung des Verfahrens nach einem der Ansprüche 1 bis 3, bestehend aus einer eine Auflagefläche (6) für den zu zerteilenden Block (15) aufweisenden Plattform (1), oberhalb der Plattform (1) und parallel zueinander angeordneten, rotierend angetriebenen Trennblättern (3), insbesondere Kreissägeblättern und auf den Block (1) einwirkenden Vorschubmitteln (16,17), dadurch gekennzeichnet, daß die Trennblätter (3) mit ihrem peripheren Rand (5) in einem derart kleinen Abstand von der Auflagefläche (6) der Plattform (1) angeordnet sind, daß der Block (1) zum größeren Teil bis auf dünne Stege (19) durchtrennt wird, und in Transportrichtung (7) des Blockes (15) hinter den Trennblättern (3) mit diesen fluchtend ausgerichtete, die Spalte zwischen der Aufnahmefläche (6) und den mit Abstand dazu angeordneten Rändern (5) der Trennblätter (3) überbrückende Trennelemente (8) zur Durchtrennung der Stege angeordnet sind.

5. Vorrichtung nach Anspruch 4, dadurch gekennzeichnet, daß die Trennelemente (8) stationär angeordnete Messer sind.

6. Vorrichtung nach Anspruch 4 oder 5, dadurch gekennzeichnet, daß die Auflagefläche (6) in gegeneinander höhenversetzte Transportbahnen (9,10) übergeht, die mit den Zwischenräumen zwischen den Trennblättern (3) fluchtend ausgerichtet sind.

7. Vorrichtung nach einem der Ansprüche 4 bis 6, dadurch gekennzeichnet, daß in Transportrichtung (7) hinter den Trennblättern (3) und oberhalb der Auflagefläche (6) und/oder der Transportbahnen (9,10) Niederhalter (11,12,13,14) für die durchtrennten Blöcke (15) vorgesehen sind.

8. Vorrichtung nach Anspruch 6 und 7, dadurch gekennzeichnet, daß die Niederhalter (11,12,13,14) mit ihren an den Blöcken (15) wirksamen Teilen als gegeneinander höhenversetzte Rollen ausgebildet sind.

**Claims**

1. Process for dividing up a block of frozen, in particular deep frozen, foodstuffs or animal feed, such as fish, meat, vegetables or the like, into smaller units by means of a plurality of parallel, disc-shaped rotating severing blades, in particular circular saw blades, in which the block is pushed below the severing blades arranged above a platform, characterized in that the block is severed through by means of the severing blades with the exception of thin webs and the webs are severed through by downstream severing elements, the severing through of the webs already beginning while the block is still being severed through by means of the severing blades.

2. Process according to Claim 1, characterized in that stationary knives are used for severing through the webs in the path of transport of the block.

3. Process according to Claim 1 or 2, characterized in that after the severing through the smaller units are offset relative to one another in terms of height during further transport.

4. Apparatus for carrying out the process according to one of Claims 1 to 3, comprising a platform (1) having a supporting surface (6) for the block (15) to be divided up, severing blades (3), in particular circular saw blades, arranged above the platform (1) parallel to one another and driven in rotation, and pushing means (16, 17) acting on the block (1), characterized in that the severing blades (3) are arranged with their peripheral edge (5) at a spacing from the supporting surface (6) of the platform (1) which is so small that the block (1) is for the greater part severed through, with the exception of thin webs (19), and arranged behind the severing blades (3) in the direction of transport (7) of the block (15) are severing elements (8) for severing through the webs, aligned with the severing blades (3) and bridging the gap between the receiving surface (6) and the edges (5), arranged spaced therefrom, of the severing blades (3).

5. Apparatus according to Claim 4, characterized in that the severing elements (B) are stationary knives.

6. Apparatus according to Claim 4 or 5, characterized in that the supporting surface (6) merges into transport tracks (9, 10) which are offset relative to one another in terms of height and which are aligned with the intermediate spaces between the severing blades (3).

7. Apparatus according to one of Claims 4 to 6, characterized in that holding-down devices (11, 12, 13, 14) for the blocks (15) severed through are provided behind the severing blades (3) in the direction of transport (7) and above the supporting surface (6) and/or the transport tracks (9, 10).

8. Apparatus according to Claims 6 and 7, characterized in that the holding-down devices (11, 12, 13, 14) are designed with their parts acting on the blocks (15) as rollers offset relative to one another in terms of height.

**Revendications**

1. Procédé de division d'un bloc de produit alimentaire ou de nouriture animale congelé, en particulier surgelé, comme du poisson, de la viande, des légumes ou similaires, en unités plus petites au moyen de plusieurs lames de tronçonnage rotatives en forme de disques circulaires disposées parallèles, en particulier lames de soie circulaire, dans lequel on fait glisser le bloc sous les lames de tronçonnage disposées au-dessus d'une plate-forme, caractérisé en ce que le bloc est séparé en barrettes minces au moyen des lames de tronçonnage, et les barrettes sont séparées par des éléments de tronçonnage disposés après, la séparation des barrettes commençant déjà lorsque le bloc est encore en train d'être séparé par les lames de tronçonnage.

2. Procédé selon la revendication 1, caractérisé en ce qu'on utilise, pour la séparation des barrettes, des couteaux disposés fixes sur le chemin de transport du bloc.

3. Procédé selon la revendication 1 ou 2, caractérisé en ce que, après la séparation, les unités plus petites sont décalées en hauteur les unes par rapport aux autres lors de la continuation du transport.

4. Dispositif pour la mise en œuvre du procédé selon l'une des revendications 1 à 3, constitué d'une plate-forme (1) présentant une surface de support (6) pour le bloc (15) à diviser, des lames de tronçonnage (3) entraînées en rotation disposées au-dessus de la plate-forme (1) et parallèles entre elles, en particulier, des lames de soie circulaire, et des moyens d'avance (16, 17) agissant sur le bloc (15), caractérisé en ce que les lames de tronçonnage (3) sont disposées à leur bord périphérique (5) à un faible écartement de la surface de support (6) de la plate-forme (1) tel que le bloc (1) est séparé pour la plus grande partie en barrettes minces (19), et des éléments de tronçonnage (8) pour la séparation des barrettes sont disposés derrière les lames de tronçonnage (3) dans la direction de transport (7), dirigés alignés avec celles-ci, pontant la fente entre la surface de support (6) et les bords (5) des lames de tronçonnage (3) disposés à écartement de celle-ci.

5. Dispositif selon la revendication 4, caractérisé en ce que les éléments de tronçonnage (8) sont des couteaux disposés stationnaires.

6. Dispositif selon la revendication 4 ou 5, caractérisé en ce que la surface de support (6) se convertit en chemins de transport (9, 10) décalés en hauteur l'un par rapport à l'autre, qui sont dirigés alignés avec les interstices entre les lames de tronçonnage (3).

7. Dispositif selon l'une des revendications 4 à 6, caractérisé en ce que des serre-flans (11, 12, 13, 14) sont prévus pour les blocs (15) séparés derrière les lames de tronçonnage (3) dans la direction de transport (7) et au-dessus de la surface de support (6) et/ou des chemins de transport (9, 10).

8. Dispositif selon la revendication 6 et 7, caractérisé en ce que les serre-flans (11, 12, 13, 14) sont formés, pour leurs parties agissant sur les blocs (15), par des rouleaux décalés en hauteur les uns par rapport aux autres.

Fig. 1

5   8   5

7

*Fig. 2*